# FASCICULE DE BREVET EUROPEEN

(11) **EP 3 526 147 B1**
(45) Date de publication et mention de la délivrance du brevet: **26.10.2022**
(21) Numéro de dépôt: 17783912.3
(22) Date de dépôt: 18.09.2017
(51) Int. Cl.: B65G 65/46

(54) **SYSTÈME COMPRENANT UN SILO ET UNE VIS BALAYEUSE**
ANLAGE MIT EINEM SILO UND EINER KEHRSCHNECKE
SYSTEM COMPRISING A SILO AND A SWEEPING AUGER

(30) Priorité: 14.10.2016 FR 1659955
(43) Date de publication de la demande: 21.08.2019
(73) Titulaire: Societe Concept Engineering, 35130 La Guerche de Bretagne (FR)
(72) Inventeur: ORHAND, Lucien, 35370 Saint Germain du Pinel (FR); SAUVION, Guillaume, 49740 La Romagne (FR); DAGUENET, Loïc, 44110 Soudan (FR)
(74) Mandataire: Ermeneux, Bertrand
(86) Numéro de dépôt international: PCT/FR2017/052482
(87) Numéro de publication internationale: WO 2018/069592

(56) Documents cités:
- FR-A1- 2 828 179
- FR-A2- 2 517 285
- GB-A- 2 518 896
- US-A- 6 039 647
- US-A1- 2016 107 849

## Description

### 1. Domaine de l'invention

Le domaine de l'invention est celui du stockage et de la manutention des matières en vrac.

Plus précisément, l'invention concerne un système comprenant un silo circulaire de stockage de produits agricoles et une vis balayeuse.

L'invention trouve notamment une application dans l'extraction de produits agricoles, tels que des récoltes de céréales, de légumineuses ou d'oléagineux, au fond des silos.

### 2. État de la technique

Dans les exploitations agricoles, dans les coopératives agricoles, ou encore dans les ports de transit, il est fréquent que l'on stocke des céréales, du grain ou des granules dans des silos circulaires

Il est connu de prévoir une trémie d'évacuation au centre du plancher horizontal d'un silo, de façon à permettre un écoulement gravitaire du produit stocké lors de la vidange du silo.

Un inconvénient de cette technique est qu'une partie des grains sur la périphérie du silo ne sont pas évacués par la trémie. Cette quantité résiduelle de grains au fond du silo, après ouverture de la trémie, résulte de l'effet de talutage, dont l'angle dépend du type de produit et notamment de la forme des grains, mais également de l'hygrométrie ambiante qui influe sur l'adhérence des grains entre eux. Ainsi, il est nécessaire, pour vider complètement le silo, d'évacuer les grains à la pelle, ce qui est laborieux et peut se révéler dangereux pour les personnes qui pénètrent dans le silo, ou d'utiliser un dispositif mécanique motorisé.

Il est ainsi connu de mettre en œuvre une vis d'Archimède motorisée, communément appelée vis balayeuse, qui balaie le plancher d'un silo circulaire en tournant autour de l'axe du silo, pour ramener vers une trappe centrale le produit à évacuer.

On connait du document FR 2 828 179 A1 une vis balayeuse pour silo à grains équipée de volets destinés à régler le débit d'extraction.

Un inconvénient des techniques connues de vis balayeuse est qu'il peut se produire un bourrage, qui contraint à arrêter la vis pour dégager la vis d'Archimède, d'autant plus fréquemment que l'ouverture de la trémie au fond du silo est de petite dimension.

### 1. Objectifs de l'invention

L'invention a donc notamment pour objectif de pallier les inconvénients de l'état de la technique cités ci-dessus.

Plus précisément l'invention a pour objectif de fournir une vis balayeuse à rotation centrale pour silo circulaire de stockage de produits agricoles ne rencontrant pas de bourrage, provoquant un blocage de sa vis sans fin, par les produits agricoles.

Un autre objectif de l'invention est de fournir une telle technique de vis balayeuse qui autorise un remplissage du silo, quelle que soit la position d'arrêt de la vis balayeuse lors du précédent balayage.

Un objectif de l'invention est également de fournir une telle technique de vis balayeuse qui ne se bloque pas, lorsqu'un bourrage se produit au niveau du tapis transporteur situé sous le silo.

C'est également un objectif de l'invention de proposer une telle technique de vis balayeuse qui puisse être mise en œuvre dans des silos de diamètres quelconques.

Un autre objectif de l'invention est de proposer une telle technique qui soit simple à mettre en œuvre.

Encore un objectif de l'invention est de fournir une telle technique qui soit fiable.

### 2. Exposé de l'invention

Ces objectifs, ainsi que d'autres qui apparaîtront par la suite sont atteints à l'aide d'une vis balayeuse à rotation centrale pour silo circulaire de stockage de
produits agricoles, tels que des céréales ou des grains, comprenant une vis sans fin et une portion de carter fixe par rapport à la vis, enveloppant partiellement la
vis sans fin de sorte à laisser un accès libre des produits agricoles à la vis sans fin d'un côté de la vis au travers d'une ouverture entre la portion fixe du carter et le plancher du silo (voir revendication 1).

Selon l'invention le carter comprend au moins un capot mobile par rapport à la portion fixe du carter, entre une position escamotée, dans laquelle l'ouverture est libérée, et une position déployée, dans laquelle le capot obstrue l'ouverture.

Ainsi, de façon inédite, l'invention propose de mettre en œuvre un carter présentant au moins une portion de carter fixe et une portion mobile formant un capot qui permet d'isoler l'accès à la vis sans fin lors du chargement du silo et qui permet un démarrage de la vis sans fin à vide dans les situations ou la vis balayeuse n'a pas été arrêtée au-dessus des trémies de vidanges ménagées dans le plancher du silo lors de la précédente opération de balayage.

Par ailleurs, on peut d'une part libérer progressivement l'accès des produits agricoles à la vis sans fin en escamotant le capot, après un écoulement gravitaire lors d'une vidange du silo, pour balayer le talus résiduel de produits.

D'autre part, on peut également obstruer cet accès pour isoler la vis sans fin, dans un silo vide avant son chargement.

En outre, lorsque le capot mobile est en position déployé et obstrue l'ouverture entre la portion fixe du carter et le plancher du silo il empêche les produits agricoles d'accéder à la vis sans fin, et les efforts sur le moteur de la vis sans fin lors du démarrage à vide sont réduits, ce qui préserve la durée de vie du moteur.

Il convient de noter que, dans le cadre de l'invention, la portion de carter fixe peut s'étendre sur toute la longueur de la vis sans fin ou s'étendre seulement sur une partie de celle-ci, et qu'en conséquence, l'ouverture entre la portion de carter fixe et le plancher peut s'étendre sur toute la longueur de la vis sans fin ou s'étendre seulement sur une partie de celle-ci.

Selon un mode de réalisation avantageux de l'invention, la vis balayeuse comprend des moyens d'actionnement motorisés du capot mobile entre la position escamotée et la position déployée.

Selon un mode de réalisation particulier de l'invention, les moyens d'actionnement comprennent un vérin et des moyens de transformation d'un mouvement de translation du vérin en un mouvement de rotation du capot.

Selon un mode de réalisation préférentiel de l'invention, les moyens de transformation sont formés d'un arbre de commande comprenant des leviers de renvoi, chaque levier de renvoi actionnant une biellette solidarisée au capot.

On obtient ainsi, un mécanisme de commande simple, fiable et de coût réduit.

Selon un mode de réalisation particulièrement avantageux de l'invention, la vis balayeuse est formée d'une pluralité de modules alignés assemblés deux à deux présentant chacun une portion de carter fixe, au moins un des modules étant un module spécifique d'une longueur adaptée de sorte que la vis balayeuse s'étende sur une distance sensiblement égale au rayon intérieur du silo.

Grâce à cette conception modulaire, il est facile de fabriquer des vis balayeuses sur mesure, adaptées à tout diamètre de silo.

Avantageusement, on peut associer des modules standards de longueurs identiques, par exemple de 3 m de long et un module de longueur spécifique.

Par ailleurs, il est possible d'utiliser directement des feuilles de matière première sans faire de découpes, simplement en les mettant en forme pour fabriquer les modules standards, ce qui réduit substantiellement les coûts de fabrication de la vis balayeuse.

En outre, la production en série de modules standards permet de réduire les délais de fabrication.

Selon un mode de réalisation particulier de l'invention, au moins deux des modules comprennent un capot mobile et en ce que les moyens d'actionnement de chacun des capots sont indépendants l'un de l'autre, de façon à pouvoir obstruer ou libérer indépendamment l'ouverture entre la portion de carter fixe de chaque module et le plancher du silo.

Ainsi, il est possible de libérer chaque ouverture indépendamment les unes des autres.

Selon un mode de réalisation avantageux de l'invention, le module situé à l'extrémité proximale de la vis sans fin ne comprend pas de capot mobile.

Ainsi, en cas d'engorgement au niveau de la trémie centrale en entonnoir du silo, située sous le moteur à l'extrémité proximale de la vis sans fin, le produit agricole en excès entraîné par la vis sans fin peut se déverser dans le silo par l'ouverture permanente formée entre le plancher et la portion fixe du carter du module situé à l'extrémité proximale.

Selon un mode de réalisation particulièrement avantageux de l'invention, la portion fixe de carter du module situé à l'extrémité proximale de ladite vis sans fin présente un décrochement configuré de sorte à faciliter l'écoulement gravitaire des produits agricoles au travers de la vis balayeuse.

Ainsi, le décrochement offre un passage plus important aux grains vers la trémie, ce qui facilite l'écoulement des grains lors de la vidange gravitaire du silo.

Selon un mode de réalisation particulier de l'invention, le module spécifique est monté entre deux modules de longueurs identiques.

### 5. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- La figure 1 est une vue en situation d'une vis balayeuse selon l'invention dans un silo à grains à embase circulaire ;
- la figure 2 est une vue en perspective de la vis balayeuse présentée en référence à la figure 1, lorsque ses capots sont en position escamotée ;
- la figure 3 est une vue en perspective de la vis balayeuse présentée en référence à la figure 1, lorsque ses capots sont déployés ;
- la figure 4 est une vue de détail d'un élément de commande d'un des capots présentés sur les figures 2 et 3 ;
- La figure 5 est une vue de détail d'un élément de guidage d'un capot présenté sur les figures 2 et 3.

### 6. Description détaillée de l'invention

### 6.1. Exemple de mode de réalisation de l'invention

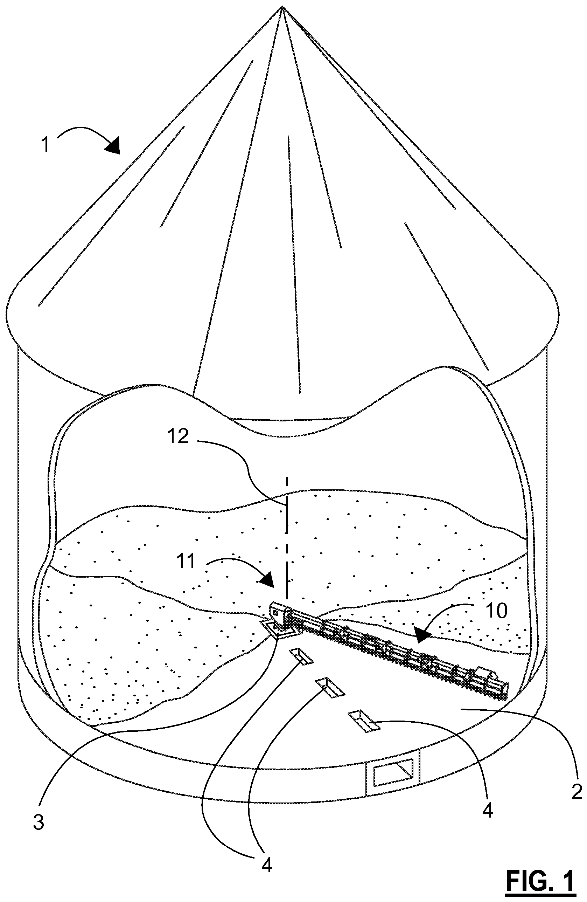

Sur la **figure 1**, on a illustré un exemple de mode de réalisation d'une vis balayeuse 10 selon l'invention équipant un silo 1 de stockage de grains, dont l'embase est circulaire.

Dans ce silo 1 à grains, la vis balayeuse 10 repose sur un plancher 2 au travers duquel sont montés une trémie centrale en entonnoir 3 et trois bouches périphériques 4 sensiblement alignées, destinées à permettre l'écoulement des grains vers le niveau inférieur du silo 1.

Au niveau inférieur, on trouve sensiblement à la verticale des bouches 4 et de l'entonnoir d'écoulement un transporteur (non représenté) qui évacue les grains vers l'extérieur du silo afin de charger un camion ou un bateau, lorsque les bouches 4 et/ou la trémie 3 sont ouvertes. Ce transporteur peut être, par exemple, un tapis convoyeur ou une vis d'Archimède.

La vis balayeuse 10 est montée à une extrémité 11 sur un axe 12 sensiblement coaxial avec l'axe de l'embase circulaire du silo 1 et l'axe d'écoulement de la trémie 3.

Ainsi, la vis balayeuse 10 peut effectuer un balayage angulaire autour de l'axe 12 pour balayer la base circulaire du silo 1 et évacuer les grains qui restent accumulés sur la périphérie du silo vers la trémie centrale 3 et/ou les bouches 4.

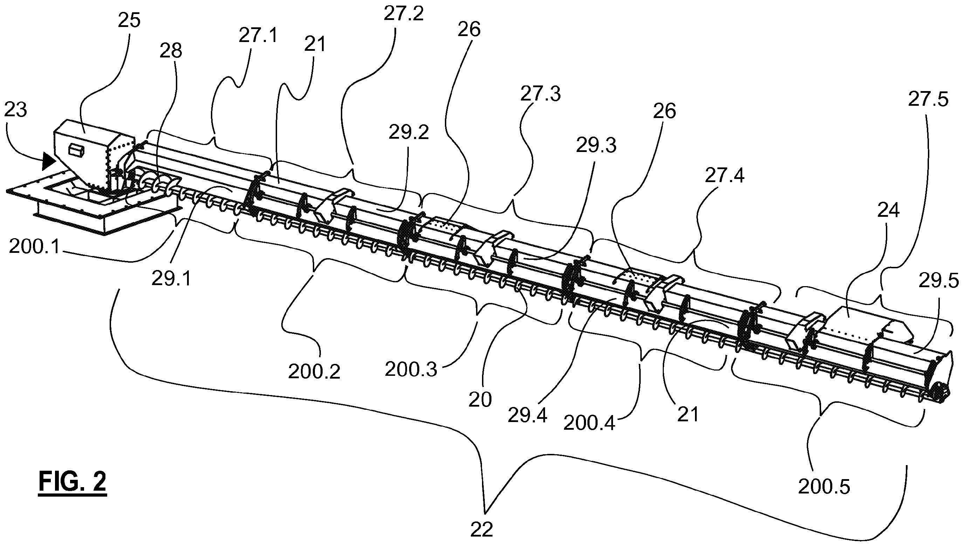

Comme on peut le voir plus en détail sur la **figure 2****,** dans une vue en perspective de la vis balayeuse 10 représentée seule, celle-ci comprend un ensemble de balayage 22 composé d'une vis d'Archimède 20, permettant d'entraîner les grains vers le centre du silo 1, partiellement recouverte d'un carter 21 de protection, présentant plusieurs portions fixes 29.1, 29.2, 29.3, 29.4, 29.5 par rapport à la vis sans fin 20.

Sur cette figure 2 on a représenté la vis balayeuse 10 dans une configuration où les grains ont un accès libre, d'un côté, à la vis sans fin 20, via des ouvertures 200.1, 200.2, 200.3, 200.4, 200.5 entre chaque portion de carter fixe et le plancher 2 du silo 1.

L'ensemble de balayage 22 est porté au niveau de son extrémité proximale par un bloc moteur 23 apte à entraîner la vis sans fin 20 en rotation et au niveau de son extrémité distale par une roue motorisée 24.

Au niveau de l'extrémité proximale de l'ensemble de balayage 22, le bloc moteur 23 est monté sur un pivot central (non représentés) logé sous un couvercle de protection 25. En outre, l'arbre du bloc moteur 23 est accouplé par l'intermédiaire d'un joint de cardan à la vis sans fin 20. Ainsi, la vis balayeuse peut tourner autour de ce pivot central, d'axe vertical dans un plan sensiblement horizontal malgré les variations de planéité du plancher 2.

Au niveau de l'extrémité distale de l'ensemble de balayage 22, la roue motorisée 24, qui soutient et garantit une avancée angulaire constante de l'ensemble de balayage 22, est coiffée par un capot de protection. Cette roue motorisée 24 d'avance, qui est du type cage d'écureuil avec des rouleaux caoutchoutés, est entraînée en rotation par un motoréducteur électrique.

Selon des variantes de ce mode de réalisation particulier de l'invention, l'ensemble de balayage 22 est équipé, en fonction de sa longueur, de roues d'avance supplémentaires fixées aux différentes structures d'ancrage 26. Ces roues d'avance supplémentaires sont entraînées par un arbre solidarisé à la roue motorisée principale 24. Ainsi, ces roues imposent une avance angulaire constante et identique aux différentes parties l'ensemble de balayage 22, ce qui permet de limiter sa torsion lorsqu'il rencontre une zone où une quantité importante de grains s'est accumulée.

Par ailleurs, on constate également sur la figure 2 que l'ensemble de balayage 22 est composé de cinq modules 27.1, 27.2, 27.3, 27.4, 27.5 assemblés bout à bout selon l'orientation longitudinale de la vis balayeuse. Le module de tête 27.1 est accouplé d'un côté au joint de cardan du bloc moteur 23 et de l'autre côté à trois modules intermédiaires 27.2, 27.3 et 27.4 suivis d'un module d'extrémité 27.5, portant la roue motorisée 24. Chaque module 27.1, 27.2, 27.3, 27.4, 27.5 comprend une portion de carter fixe 29.1, 29.2, 29.3, 29.4, 29.5 par rapport à la vis sans fin 20.

La partie supérieure du carter 21 du module de tête 27.1 comprend un décrochement 28 qui offre un passage plus important aux grains vers la trémie 3, afin de faciliter l'écoulement des grains lors de la vidange gravitaire du silo 1. En outre, en cas de bourrage au niveau de la trémie 3, suite à un dysfonctionnement du transporteur situé sous le plancher 2, les grains qui sont avalés par la vis sans fin 20 et transportés vers l'entonnoir 3, sont refoulés vers le haut au travers du décrochement 28.

Pour fabriquer la vis balayeuse 10 de longueur sensiblement égale au rayon de la base circulaire du silo 1, on assemble les modules de longueurs identiques 27.1 à 27.4 avec le module d'extrémité spécifique 27.5, destiné à compléter la longueur de la vis.

Dans ce mode de réalisation de l'invention illustré par la figure 2, le module de tête 27.1 est distant de 0,5 m du centre du plancher circulaire, les modules 27.1 à 27.4 ont sensiblement une longueur de 3 m et le module 27.5 présente une longueur d'environ 1,5 m, ce qui permet de balayer presque toute la surface du plancher du silo 1, de rayon intérieur égal à 14 m, avec la vis 10.

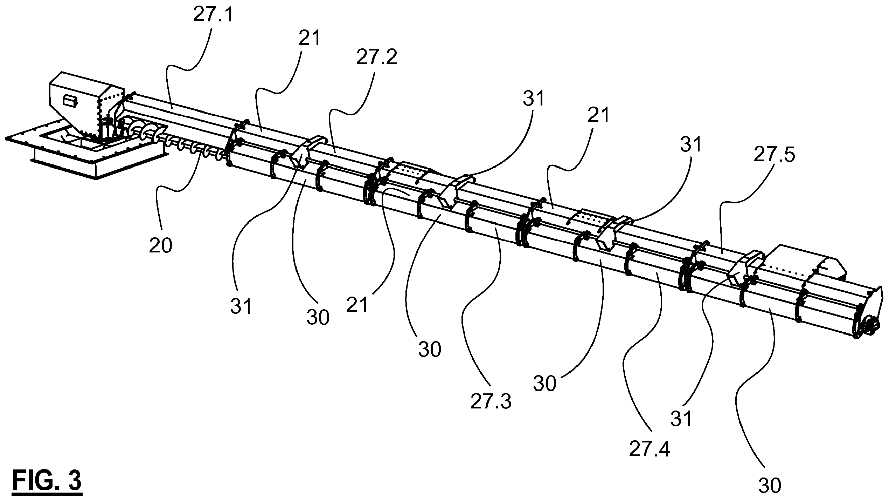

Sur cette **figure 3** on a représenté la vis balayeuse 10 dans une configuration où des capots 30, appartenant au carter 21, sont déployés et empêchent l'accès des grains à la vis sans fin 20 au travers de l'ouverture 200.2, respectivement 200.3, 200.4, 200.5 existant entre la portion de carter fixe 29.2, respectivement 29.3, 29.4, 29.5 et le plancher 2.

Comme on peut le voir sur la figure 3, chaque module 27.2 à 27.5 de la vis balayeuse 10 est équipé d'un capot 30 amovible, qui ferme un volume intérieur autour de la vis sans fin 20, délimité par ailleurs par la portion fixe du carter 21 et le plancher 2. Ainsi on peut obstruer l'accès à la vis sans fin via les ouvertures 200.2, 200.3, 200.4, 200.5 et empêcher les grains de pénétrer à l'intérieur du volume fermé autour de la vis d'Archimède 20. Pour cela, chaque capot 30 est mobile et manœuvré par un actionneur, tel qu'un vérin électrique, logé sous un carter de protection 31.

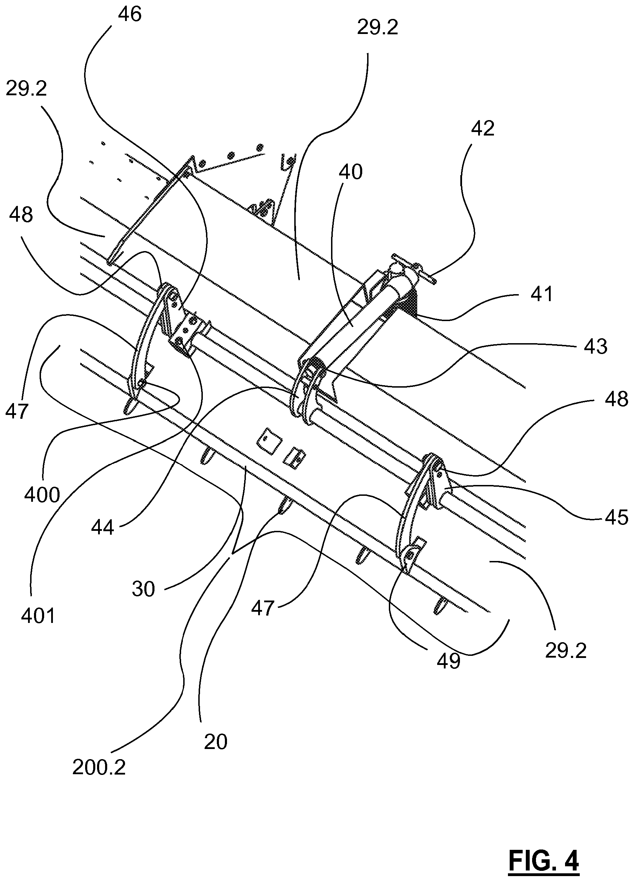

On a représenté sur la **figure 4** une vue partielle en perspective d'un module de la vis balayeuse dont le capot 30 est en position escamotée, comme sur la figure 2. Sur cette figure 4, la portion fixe du carter de protection 31 a été masquée, afin que l'on puisse voir les moindres détails du mécanisme de manœuvre du capot 30.

Comme on peut le voir sur la figure 4, l'extrémité du corps du vérin électrique 40, du côté du moteur 41, est montée libre en rotation autour d'un axe d'oscillation 42, solidarisé au carter de protection 31. À l'autre extrémité du corps du vérin 40 est montée une tige accouplée par un premier axe 43 à un levier 44 fixé sur un arbre de commande 45. Sur cet arbre de commande 45, maintenu par des brides 401, sont également fixés des leviers de renvoi 46. Chaque levier de renvoi 46 est solidarisé à une première extrémité d'une biellette 47 via un deuxième axe 48. La seconde extrémité de chaque biellette 47 est solidarisée à une oreille 49 fixée sur le capot 30 à l'aide d'un troisième axe 400. Cette oreille 49 est par exemple fixée en bordure de la lèvre extérieure du capot 30, qui est sensiblement au contact du plancher 2 lorsque le capot 30 est déployé.

Ainsi, lorsque la tige du vérin 40 s'allonge, le mouvement de translation de la tige du vérin est converti en un déplacement angulaire d'environ 90 ° par l'arbre de commande 45. Ce déplacement angulaire est retransmis par l'arbre de commande 45 aux leviers de renvoi 46 puis par l'intermédiaire des biellettes 47 au capot 30, qui passe de la position escamotée à la position déployée.

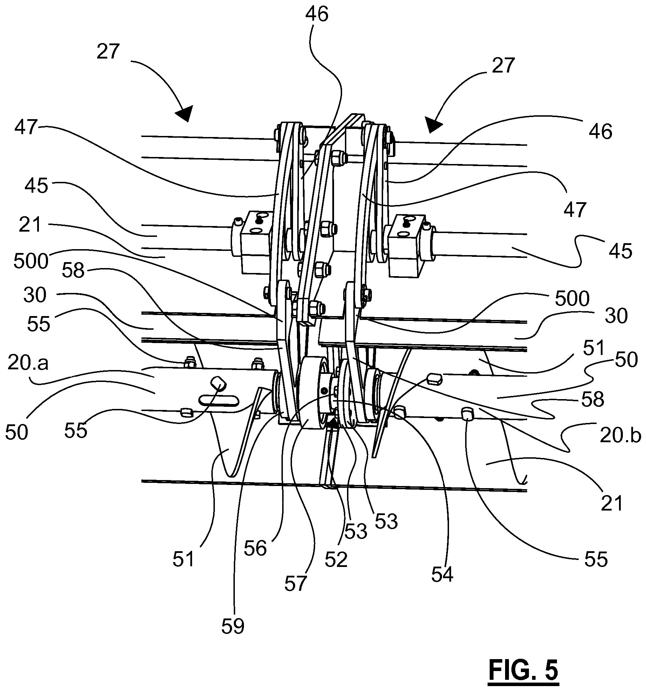

On a illustré sur la **figure 5** une vue de détail de la zone d'assemblage de deux modules 27.2 et 27.3 contigus.

Comme on peut le constater sur la figure 5, la vis d'Archimède 20 est composée de deux portions 20.a, 20.b. Chaque portion 20.a, 20.b est formée d'un moyeu 50 autour duquel s'enroule une hélice hélicoïdale 51. Ces portions 20.a, 20.b sont reliées par des arbres de liaison 52. Chaque arbre de liaison 52 est formé d'une portion 53 formant une bride se prolongeant par une portion 54 formant un axe qui s'insère dans le moyeu 50 et est fixé à celui-ci par des boulons 55. L'assemblage des deux portions 20.a, 20.b de la vis sans fin 20 est assuré par des boulons 56 qui maintiennent alignées et serrées l'une contre l'autre les deux collerettes des deux brides 53.

On voit également que la portion d'axe 54 de l'arbre 52 traverse un palier 57, fixé par une plaque au carter 21, qui permet de figer la position axiale de la vis sans fin 20 dans l'ensemble de balayage 22.

Un bras d'articulation 58 du capot 30 est monté pivotant autour de l'axe 54 sur une bague en bronze frittée et fixé au capot 30 sensiblement au niveau de son extrémité distale, la plus éloignée de l'axe 54. L'extrémité distale du bras d'articulation 58 présente une oreille 500 sur laquelle s'articule la seconde extrémité de la biellette 47 du mécanisme de commande précédemment décrit en relation avec la figure 4

### 6.2. Autres caractéristiques optionnelles et avantages de l'invention

Dans des variantes du mode de réalisation de l'invention détaillé ci-dessus, il peut également être prévu :
- d'intégrer au niveau de la trémie formant entonnoir un capteur anti bourrage, tel un capteur mécanique, ou encore un capteur inductif ;
- que le moteur de la vis balayeuse soit un motoréducteur ;
- que la roue motorisée soit remplacée par une roue entraînée par la rotation de la vis sans fin 20 via une courroie ou une chaîne ;
- de placer le module spécifique à une position quelconque entre deux modules de longueurs identiques dans l'ensemble de balayage ;
- que chaque roue d'avance supplémentaire soit individuellement motorisée.

## Revendications

1. Système comprenant un silo (1) circulaire de stockage de produits agricoles, tels que des céréales ou des grains, et une vis balayeuse (10) à rotation centrale comprenant une vis sans fin (20) et une portion de carter fixe (29.1, 29.2, 29.3, 29.4, 29.5) par rapport à ladite vis, enveloppant partiellement ladite vis sans fin de sorte à laisser un accès libre desdits produits agricoles à ladite vis sans fin d'un côté de ladite vis au travers d'une ouverture (200.2, 200.3, 200.4, 200.5) entre ladite portion fixe dudit carter et le plancher dudit silo, **caractérisé en ce que** ledit carter comprend au moins un capot mobile par rapport à ladite portion fixe dudit carter, entre une position escamotée, dans laquelle ladite ouverture est libérée, et une position déployée, dans laquelle ledit capot (30) obstrue ladite ouverture.

2. Système selon la revendication 1, **caractérisée en ce qu'**elle comprend des moyens d'actionnement motorisés dudit capot mobile entre ladite position escamotée et ladite position déployée.

3. Système selon l'une des revendications 1 et 2, **caractérisée en ce que** lesdits moyens d'actionnement comprennent un vérin (40) et des moyens de transformation d'un mouvement de translation dudit vérin en un mouvement de rotation dudit capot.

4. Système selon l'une des revendications 1 à 3, **caractérisée en ce que** lesdits moyens de transformation sont formés d'un arbre de commande (45) comprenant des leviers de renvoi, chaque levier de renvoi actionnant une biellette solidarisée audit capot.

5. Système selon l'une des revendications 1 à 4, **caractérisée en ce que** ladite vis balayeuse (10) est formée d'une pluralité de modules (27.1, 27.2, 27.3, 27.4, 27.5) alignés assemblés deux à deux présentant chacun une portion de carter fixe (29.1, 29.2, 29.3, 29.4, 29.5), au moins un desdits modules étant un module spécifique d'une longueur adaptée de sorte que ladite vis balayeuse s'étende sur une distance sensiblement égale au rayon intérieur dudit silo.

6. Système selon la revendication 5, **caractérisé en ce qu'**au moins deux desdits modules (29.2, 29.3, 29.4, 29.5) comprennent un capot mobile et **en ce que** les moyens d'actionnement de chacun desdits capots (30) sont indépendants l'un de l'autre, de façon à pouvoir obstruer ou libérer indépendamment l'ouverture (200.2, 200.3, 200.4, 200.5) entre ladite portion de carter fixe de chaque module et le plancher dudit silo.

7. Système selon la revendication 6, **caractérisée en ce que** le module (29.1) situé à l'extrémité proximale de ladite vis sans fin ne comprend pas de capot mobile.

8. Système selon l'une des revendications 5 à 7, **caractérisée en ce que** ladite portion fixe de carter du module (29.1) situé à l'extrémité proximale de ladite vis sans fin présente un décrochement (28) configuré de sorte à faciliter l'écoulement gravitaire desdits produits agricoles au travers de ladite vis balayeuse.

9. Système selon l'une des revendications 5 à 7, **caractérisée** en ce ledit module spécifique est monté entre deux modules (29.1, 29.5) de longueurs identiques.

## Patentansprüche

1. System, umfassend ein rundes Silo (1) für die Lagerung von landwirtschaftlichen Produkten wie Getreide oder Körner und eine Kehrschnecke (10) mit zentraler Rotation, umfassend eine Schnecke (20) und einen Gehäuseabschnitt (29.1, 29.2, 29.3, 29.4, 29.5), der im Verhältnis zur Schnecke fest ist, der die Schnecke teilweise derart umgibt, dass ein freier Zugang der landwirtschaftlichen Produkte zu der Schnecke von einer Seite der Schnecke durch eine Öffnung (200.2, 200.3, 200.4, 200.5) zwischen dem festen Abschnitt des Gehäuses und dem Boden des Silos verbleibt, **dadurch gekennzeichnet, dass** das Gehäuse mindestens eine Abdeckung umfasst, die im Verhältnis zu dem festen Gehäuseabschnitt zwischen einer eingezogenen Position, in welcher die Öffnung freigegeben ist, und einer ausgefahrenen Position, in welcher die Abdeckung (30) die Öffnung verschließt, beweglich ist.

2. System nach Anspruch 1, **dadurch gekennzeichnet, dass** es motorisierte Betätigungsmittel der beweglichen Abdeckung zwischen der eingezogenen Position und der ausgefahrenen Position umfasst.

3. System nach einem der Ansprüche 1 und 2, **dadurch gekennzeichnet, dass** die Betätigungsmittel einen Zylinder (40) und Umwandlungsmittel einer translatorischen Bewegung des Zylinders in eine rotatorische Bewegung der Abdeckung umfasst.

4. System nach einem der Ansprüche 1 bis 3, **dadurch gekennzeichnet, dass** die Umwandlungsmittel von einer Steuerwelle (45) gebildet sind, die Umlenkhebel umfasst, wobei jeder Umlenkhebel einen Schwingarm betätigt, der mit der Abdeckung fest verbunden ist.

5. System nach einem der Ansprüche 1 bis 4, **dadurch gekennzeichnet, dass** die Kehrschnecke (10) von einer Vielzahl von Modulen (27.1, 27.2, 27.3, 27.4, 27.5) gebildet ist, die paarweise zusammengesetzt ausgerichtet sind, wobei jedes einen festen Gehäuseabschnitt (29.1, 29.2, 29.3, 29.4, 29.5) aufweist, wobei mindestens eins der Module ein spezielles Modul mit einer Länge ist, die derart angepasst ist, dass sich die Kehrschnecke über eine Entfernung erstreckt, die etwa dem Innenradius des Silos entspricht.

6. System nach Anspruch 5, **dadurch gekennzeichnet, dass** mindestens zwei der Module (29.2, 29.3, 29.4, 29.5) eine bewegliche Abdeckung umfassen und dass die Betätigungsmittel jeder der Abdeckungen (30) voneinander unabhängig sind, so dass die Öffnung (200.2, 200.3, 200.4, 200.5) zwischen dem festen Gehäuseabschnitt jedes Moduls und dem Boden des Silos unabhängig verschließbar oder freigebbar ist.

7. System nach Anspruch 6, **dadurch gekennzeichnet, dass** das Modul (29.1), das sich am proximalen Ende der Schnecke befindet, keine bewegliche Abdeckung umfasst.

8. System nach einem der Ansprüche 5 bis 7, **dadurch gekennzeichnet, dass** der feste Gehäuseabschnitt des Moduls (29.1), das sich am proximalen Ende der Schnecke befindet, einen Absatz (28) aufweist, der derart ausgelegt ist, dass der Abfluss der landwirtschaftlichen Produkte durch die Kehrschnecke durch Schwerkraft erleichtert wird.

9. System nach einem der Ansprüche 5 bis 7, **dadurch gekennzeichnet, dass** das spezielle Modul zwischen zwei Modulen (29.1, 29.5) mit identischen Längen angebracht ist.

## Claims

1. System comprising a circular silo (1) for storing agricultural products, such as cereals or grains, and a centrally rotating sweeping screw (10) comprising an endless screw (20) and a portion of housing (29.1, 29.2, 29.3, 29.4, 29.5) which is fixed with respect to said screw, partially enveloping said endless screw so as to leave free access of said agricultural products to said endless screw on one side of said screw through an opening (200.2, 200.3, 200.4, 200.5) between said fixed portion of said housing and the floor of said silo, **characterized in that** said housing comprises at least one cover movable with respect to said fixed portion of said housing between a retracted position, in which said opening is released, and a deployed position, in which said cover (30) obstructs said opening.

2. A system according to claim 1, **characterized in that** it comprises motorized actuation means of said movable cover between said retracted position and said deployed position.

3. System according to one of claims 1 and 2, **characterised in that** said actuating means comprise a jack (40) and means for transforming a translational movement of said jack into a rotational movement of said cover.

4. System according to one of claims 1 to 3, **characterised in that** said transformation means are composed of a control shaft (45) comprising return levers, each return lever actuating a linkage attached to said cover.

5. System according to one of claims 1 to 4, **characterized in that** said sweeping screw (10) is formed of a plurality of modules (27.1, 27.2, 27.3, 27.4, 27.5) aligned in pairs and each having a fixed housing portion (29.1, 29.2, 29.3, 29.4, 29.5), at least one of said modules being a specific module of a length adapted so that said sweeping screw extends over a distance substantially equal to the inner radius of said silo.

6. A system according to claim 5, **characterised in that** at least two of said modules (29.2, 29.3, 29.4, 29.5) comprise a movable cover and **in that** the actuation means of each of said covers (30) are independent of each other, so as to be able to independently obstruct or release the opening (200.2, 200.3, 200.4, 200.5) between said fixed housing portion of each module and the floor of said silo.

7. A system as claimed in claim 6, **characterised in that** the module (29.1) at the proximal end of said endless screw does not comprise a movable cover.

8. A system according to any one of claims 5 to 7, **characterised in that** said fixed housing portion of the module (29.1) located at the proximal end of said endless screw has a step (28) configured to facilitate the gravitational flow of said agricultural products through said sweeper screw.

9. System according to one of claims 5 to 7, **characterised in that** said specific module is mounted between two modules (29.1, 29.5) of identical lengths.
